# EUROPÄISCHE PATENTSCHRIFT

(11) **EP 1 477 367 B1**
(45) Veröffentlichungstag und Bekanntmachung des Hinweises auf die Patenterteilung: **30.08.2006**
(21) Anmeldenummer: 04090189.4
(22) Anmeldetag: 12.05.2004
(51) Int. Cl.: B60R 13/02, B60R 21/20, B32B 27/12, B32B 27/32

(54) **Dreischichtiges Kunststoffformteil für Kraftfahrzeuginnenverkleidungen und Herstellungsverfahren hierfür**
Three layer plastic panel and method of making same
Garniture interieure plastique avec trois et procédé pour sa fabrication

(30) Priorität: 12.05.2003 DE 10322101
(43) Veröffentlichungstag der Anmeldung: 17.11.2004
(73) Patentinhaber: Faurecia Innenraum Systeme GmbH, 76767 Hagenbach (DE)
(72) Erfinder: Vilarasau-Durany, Marta, 25600 Balaguer (ES)
(74) Vertreter: Pfenning, Meinig & Partner GbR

(56) Entgegenhaltungen:
- EP-A- 0 320 925
- DE-A- 4 211 708
- DE-C- 19 729 780
- DE-U- 9 309 206
- GB-A- 2 067 135
- US-A- 5 779 262

## Beschreibung

Die Erfindung betrifft ein dreischichtiges Kunststoffformteil für Innenverkleidungen, insbesondere für Kraftfahrzeuginnenverkleidungen, nach dem Oberbegriff des Hauptanspruchs (DE 42 11 708 A) sowie ein Verfahren für dessen Herstellung.

Die US-A-5 779262 zeigt ein Kunststoffformteil mit einer unsichtbaren Airbagabdeckung.

Kunststoffformteile, die aus einer Dekorschicht und einem der Dekorschicht hinterspritzten Kunststoffträger bestehen, finden Verwendung, wenn man eine ästhetischen Ansprüchen genügende Oberfläche mit einer möglichst einfachen Herstellbarkeit des Kunststoffformteils verbinden möchte. Aus der Patentschrift DE 197 29 780 ist ein entsprechendes Verfahren bekannt, bei dem ein Dekormaterial in ein Spritzgusswerkzeug eingelegt und anschließend mit einem Kunststoff hinterspritzt wird. Durch das Hinterspritzen erspart man sich ein aufwendiges nachträgliches Aufkaschieren von Dekormaterialien der gewünschten Eigenschaften. Bei einer Herstellung gattungsgemäßer Kunststoffformteile durch Hinterspritzen ist allerdings darauf zu achten, dass nicht nur beim Hinterspritzen mit einer Hinterspritzmasse eine hinreichend feste Verbindung von Dekorschicht und einem durch die Hinterspritzmasse gebildeten Kunststoffträger zustande kommt, sondern gleichzeitig auch die Dekorschicht vor Schäden bewahrt bleibt, welche durch Überhitzen oder aufgrund von die Dekorschicht durchdringender Hinterspritzmasse leicht entstehen können. Das gilt insbesondere dann, wenn die Dekorschicht aus einem porösen Material wie z.B. einem Gewebe besteht. Aus der genannten Druckschrift ist es bekannt, die Dekorschicht vor dem Hinterspritzen rückseitig mit einer Folie zu beschichten, welche am fertigen Kunststoffformteil zu einer filmartigen Zwischenschicht zwischen Dekorschicht und Kunststoffträger führt. Eine solche Zwischenschicht kann beim Hinterspritzen als Barriere zur Vermeidung oben erläuterter Schäden dienen, auch wenn die zitierte Druckschrift eine derartige Funktion der Folie nicht ausdrücklich erwähnt.

Das bekannte Herstellungsverfahren und damit herstellbare Kunststoffformteile sind jedoch mit Nachteilen verbunden. Ein Aufbringen einer Folie als weitere Schicht auf die Dekorschicht vor dem Hinterspritzen ist mit zusätzlichen Arbeitsschritten und dem entsprechenden Aufwand verbunden. Das gilt insbesondere, weil an die Festigkeit der Verbindung von Dekorschicht und Zwischenschicht hohe Anforderungen gestellt werden. Diese Verbindung kann z.B. durch den Einsatz von Klebemitteln realisiert werden, deren Auftragen einen weiteren aufwendigen Arbeitsschritt notwendig macht und die Anzahl der zu verwendenden Materialien erhöht. Ein weiterer, durch einen Einsatz von Klebemitteln noch vergrößerter Nachteil ist die schlechte Recyclebarkeit entsprechender Kunststoffformteile, bei denen durch ihren mehrschichtigen Aufbau Materialien verschiedener chemischer Zusammensetzung eingesetzt sind. Zum Recyceln müsste man ein solches Kunststoffformteil in nicht praktikabler Weise in stoffreine Komponenten zerlegen.

Der Erfindung liegt also die Aufgabe der Entwicklung eines Kunststoffformteils zugrunde, welches die Vorteile einer einfachen Herstellbarkeit durch Hinterspritzen, wenn möglich unter Vermeidung zusätzlicher Arbeitsschritte, und ansprechender optischer Eigenschaften seiner Oberfläche mit dem Vorteil einer guten Recycelbarkeit verbindet, sowie der Entwicklung eines entsprechenden Herstellungsverfahrens.

Diese Aufgabe wird erfindungsgemäß gelöst durch ein Kunststoffformteil und ein Verfahren mit den Merkmalen des Anspruchs 1 bzw. 8. Vorteilhafte Ausgestaltungen der Erfindung ergeben sich aus den Unteransprüchen.

Dadurch, dass mit Dekorschicht, Zwischenschicht und einer durch den Kunststoffträger gebildeten dritten Schicht alle drei Schichten des erfindungsgemäßen Kunststoffformteils aus Polyolefinen bestehen, wobei alle Schichten kleberfrei miteinander verbunden sind, ist eine gute Recycelbarkeit des Kunststoffformteils gewährleistet, ohne dass eine Trennung in verschiedene Komponenten zum Recyceln notwendig wäre. Mit der Formulierung, etwas "bestehe" aus einem bestimmten Material, soll in der vorliegenden Schrift gemeint sein, dass dieses Material vorzugsweise dessen einziger stofflicher Bestandteil ist oder aber Zusatzstoffe wie Farbstoffe oder Verarbeitungshilfsmittel (Stabilisatoren) in geringen, die Recycelbarkeit nicht beeinträchtigenden Mengen vorhanden sein können, insbesondere für die Hinterspritzmasse soll außerdem ein Zusatz von Füllstoffen und/oder Verstärkungsstoffen wie z.B. Glasfasern oder Talkum, letzteres vorzugsweise mit einem Gewichtsanteil von 10% bis 40%, zulässig sein. Es handelt sich dabei um insbesondere für Polypropylen übliche Füllstoffe, die ein Recyceln nicht beeinträchtigen, weil dabei gewonnenes Recyclat wieder zusammen mit diesen Füllstoffen verwendet werden kann.

Die Erfindung sieht die Integrierung einer unsichtbaren Airbagabdeckung in das Kunststoffformteil vor. Mit unsichtbar ist dabei gemeint, dass das Vorhandensein einer Airbagklappe der durch die Dekorschicht gebildeten Oberfläche des Kunststoffformteils nicht anzusehen ist. Das lässt sich besonders vorteilhaft dadurch realisieren, dass die Dekorschicht selbst als Scharnier für eine Airbagklappe und/oder als Sollbruchstelle für einen Airbagdurchtritt fungiert. Das ist möglich, wenn der Kunststoffträger an den entsprechenden Stellen zur Schwächung eine reduzierte oder sogar verschwindende Dicke aufweist. Solche Schwächungen des Kunststoffträgers können nach dem Hinterspritzen nachträglich angebracht werden, beispielsweise durch ein Prägen in die noch nicht ausgekühlte Hinterspritzmasse, möglich und mit Blick auf eine einfache Herstellung zweckmäßig ist es aber auch, die entsprechenden Stellen gleich beim Hinterspritzen durch ein Auftragen der Hinterspritzmassen mit reduzierter Dicke oder durch ein Aussparen der entsprechenden Stellen mit Schwächungen zu versehen. Das kann man durch eine entsprechende Formgebung der Spritzgussform erreichen.

Die Verwendung eines polyolefinischen Gewebes, Gestricks oder Gewirkes als Dekorschicht führt zu angenehmen optischen und auch haptischen Oberflächeneigenschaften des Kunststoffformteils. Für eine gute und hinreichend feste Verbindung der Dekorschicht mit der den Kunststoffträger bildenden Hinterspritzmasse sorgt der geschickt ausgewählte und ebenfalls polyolefinische Film, welcher die Zwischenschicht bildet. Zur Herstellung des Kunststoffformteils muss dieser Film nicht eigens vor dem Hinterspritzen der Dekorschicht mit der Dekorschicht in eine feste Verbindung gebracht werden. Es reicht, wenn er zusammen mit dieser in die zum Hinterspritzen verwendete Spritzgussform eingebracht wird. Unter optimaler Vermeidung unnötiger Arbeitsschritte kommt die Verbindung von Dekorschicht und Zwischenschicht dann während des Hinterspritzens zustande, also gleichzeitig mit der Verbindung der den Kunststoffträger bildenden Hinterspritzmasse mit der Zwischenschicht. Allerdings können die Dekorschicht und die Zwischenschicht auch bereits vor dem Hinterspritzen in einem Vorprozess durch Heißpressen oder Kalandrieren miteinander verbunden werden. Die Verbindung geschieht dabei jeweils durch ein Aufschmelzen oder auch teilweises Verschmelzen der verschiedenen Schichten aufgrund einer mit dem Hinterspritzen verbundenen Erwärmung der Zwischenschicht. Der als Zwischenschicht fungierende Film verbindet damit in besonders geschickter Weise die Funktion der Verbindung von Dekorschicht und Kunststoffträger mit einer Barrierefunktion, indem er das Durchdringen von Hinterspritzmasse in die als Gewebe, Gestrick oder Gewirke poröse Dekorschicht sowie ein Überhitzen der Dekorschicht beim Hinterspritzen verhindert. Eine Anwendung zusätzlicher Klebemittel, die bei einem späteren Recyceln schädlich wären, ist dagegen nicht nötig.

Um mit dem beschriebenen Herstellungsverfahren einen hinreichend homogenen Kunststoffträger zu erhalten und dessen gute Verbindung mit der Dekorschicht zu erreichen, gleichzeitig aber jede unnötige Belastung der Dekorschicht zu vermeiden, sind Temperatur und Druck der Hinterspritzmasse für den Kunststoffträger beim Hinterspritzen geeignet zu wählen. Gute Resultate werden erzielt, wenn die Hinterspritzmasse mit einer Temperatur von zwischen 180°C und 280°C hinterspritzt wird, wobei die Hinterspritzmasse mit einem Druck von zwischen 50 bar und 100 bar, vorzugsweise zwischen 55 bar und 70 bar beaufschlagt wird. Zur Vermeidung von Schäden an der Dekorschicht ist darauf zu achten, dass die Temperatur eines die Dekorschicht beim Hinterspritzen aufnehmenden Teils der Spritzgussform dabei einen Wert von 40°C nicht übersteigt.

Für eine mit Blick auf dessen gute Recycelbarkeit wünschenswerte Herstellung des Kunststoffformteils aus einem möglichst einheitlichen Material ist es vorteilhaft, für Dekorschicht, Zwischenschicht und Kunststoffträger nicht nur Polyolefine sondern ausschließlich Polypropylen und/oder Polyethylen zu verwenden, zur Realisierung einer konsequenten Einstofflösung vorzugsweise sogar ausschließlich Polypropylen, welches sich als Hinterspritzmasse für Kunststoffträger besonders gut eignet. Es ist ein besonderes Verdienst der vorliegenden Erfindung, einen Polypropylenfilm gefunden zu haben, der sich zum Verbinden von Dekorschicht und Hinterspritzmasse sowie als Barriere zum Schutz der Dekorschicht beim Hinterspritzen eignet.

Es erweist sich als zweckmäßig, wenn der Film für eine gute Erfüllung seiner Aufgaben eine Dicke zwischen 25 µm und 150 µm, vorzugsweise zwischen 50 µm und 70 µm hat. Hier und an entsprechenden Stellen soll dabei unter der Dicke einer Schicht, wenn diese teilweise mit einer Nachbarlage verschmolzen und an ihrem Rand diffus ist, der maximale Abstand von zumindest ursprünglich eindeutig zu dieser Schicht gehörenden Partikeln senkrecht zur entsprechenden Schichtebene gemeint sein. Die Vermeidung einer unnötig großen Dicke der Zwischenschicht dient einer Material- und damit Gewichts- und Kostenersparnis und erleichtert auch ein gutes Aufschmelzen des Films auf die Dekorschicht beim Hinterspritzen. Das Auskommen mit relativ wenig Material, insbesondere bei einer dünnen Auslegung der Zwischenschicht ist ein Vorteil der vorliegenden Erfindung gegenüber solchen Realisierungen ähnlicher Kunststoffformteile, welche aus einer größeren Zahl von Schichten oder/und aus dickeren Schichten bestehen. Die Dekorschicht ist zur Erzielung gewünschter optischer Eigenschaften sowie zur Gewährleistung der nötigen Festigkeit vorzugsweise mit einer Dicke zwischen 0,4 mm und 1,2 mm zu wählen. Um einerseits das Gewicht des Kunststoffformteils so gering wie möglich zu halten, auch für eine mit Materialeinsparungen verbundene Kostenreduzierung, aber auch eine hinreichende Stabilität des Kunststoffformteils zu erreichen, ist es vorteilhaft, die Hinterspritzmasse mit einer Dicke von zwischen 1,5 mm und 5 mm, bei besonders leichter Bauweise vorzugsweise zwischen 2 mm und 3 mm aufzutragen, was in einer entsprechenden Dicke der den Kunststoffträger bildenden Schicht resultiert.

Besonders geeignete Verwendungen für erfindungsgemäße Kunststoffformteile sind Türinnenverkleidungen, Säulenverkleidungen für A-, B- oder C-Säulen von Kraftfahrzeugen oder Instrumentenbretter, auch die Verwendung als Bestandteil derartiger Verkleidungen oder von Instrumentenbrettern ist möglich. Neben Innenverkleidungen für Kraftfahrzeuge bilden auch Verkleidungen für Innenräume von Luftfahrzeugen oder Wasserfahrzeugen mögliche Einsatzbereiche.

Ausführungsbeispiele der Erfindung werden anhand der Figuren 1 bis 3 beschrieben. Es zeigt
- Figur 1: einen Ausschnitt eines erfindungsgemäßen Kunststoffformteils als Querschnitt durch dessen verschiedene Schichten,
- Figur 2: in gleicher Darstellung einen Teil eines mit einer Airbagabdeckung ausgestatteten erfindungsgemäßen Kunststoffformteils,
- Figur 3: drei Verfahrensschritte für ein erfindungsgemäßes Herstellungsverfahren eines Kunststoffformteils.

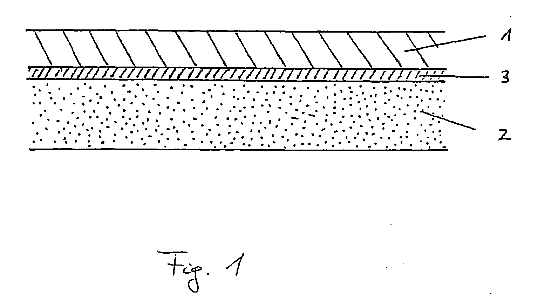

In Figur 1 ist ein Teil eines Kunststoffformteils für eine Kraftfahrzeuginnenverkleidung als Querschnitt abgebildet. Zu sehen ist ein dreischichtiger Aufbau mit einer Dekorschicht 1, einem dieser hinterspritzten Kunststoffträger 2 und einer als Film ausgebildeten, zwischen Dekorschicht 1 und Kunststoffträger 2 angeordneten Zwischenschicht 3. Die Dekorschicht 1, die Zwischenschicht 3 und der Kunststoffträger 2 sind dadurch kleberfrei miteinander verbunden, dass die Zwischenschicht 3 auf die Dekorschicht 1 und den Kunststoffträger 2 aufgeschmolzen bzw. teilweise mit diesen verschmolzen ist. Alle drei Schichten des Kunststoffformteils bestehen aus Polypropylen, wodurch eine konsequente, für ein unkompliziertes Recyceln geeignete Einstofflösung realisiert ist. Dabei ist die Dekorschicht 1 als Gewebe oder Gestrick ausgeführt, was zu einer Oberfläche des Kunststoffformteil mit angenehmen optischen und haptischen Eigenschaften führt. Der die Zwischenschicht 3 bildende Polypropylenfilm, im vorliegenden Beispiel das Produkt TC 3070 von Prochimir, hat eine Dicke von ca. 60 µm, die Dekorschicht eine Dicke von etwa 0,8 mm und der Kunststoffträger bildet eine Schicht mit einer Schichtdicke zwischen 2 mm und 3 mm. Die Wahl der Schichtdicken gewährleistet eine hinreichende Stabilität des Kunststoffformteils bei für Gewicht und Herstellungskosten günstigen geringen Materialmengen.

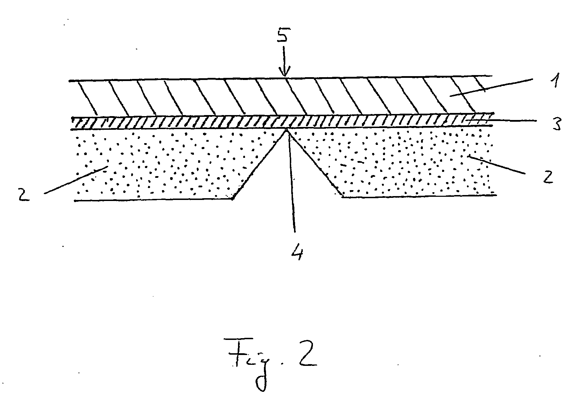

Der in Figur 2 dargestellte Querschnitt durch ein erfindungsgemäßes Kunststoffformteil mit einer Airbagabdeckung zeigt ebenfalls alle Merkmale des in Figur 1 abgebildeten Kunststoffformteils. Zusätzlich ist eine Schwächung 4 zu erkennen, welche durch eine reduzierte und hinter der mit 5 bezeichneten Stelle der Dekorschicht sogar verschwindende Dicke des Kunststoffträgers 2 realisiert ist. An der Stelle 5 bildet die Dekorschicht dadurch im Verbund mit der Zwischenschicht ein Scharnier für eine Airbagklappe, welche dem Kunststoffformteil an seiner Oberfläche nicht anzusehen ist. Dabei erlaubt das Scharnier ein Aufklappen eines als Airbagklappe dienenden Teils des Kunststoffformteils um eine zur Abbildungsebene senkrecht stehende Scharnierachse. In ähnlicher Weise ist durch eine Schwächung des Kunststoffträgers eine ebenfalls unsichtbare Sollbruchstelle für einen Airbagdurchtritt realisierbar. Die Schwächung 4 ist aufwandsarm herstellbar durch eine entsprechende Formung einer Spritzgussform, in welcher das Kunststoffformteil durch Hinterspritzen der vorher in einen Teil der Spritzgussform eingebrachten Dekorschicht 1 und Zwischenschicht 3 gebildet wird.

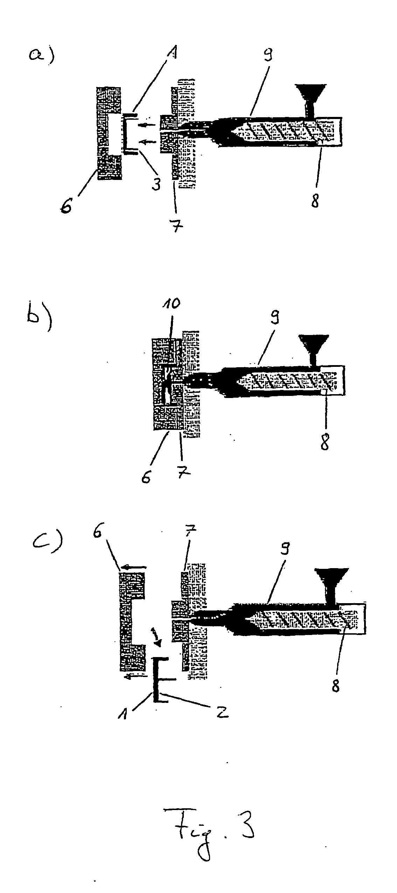

Die Figur 3 zeigt in den mit a, b und c gekennzeichneten Zeichnungen drei in dieser Reihenfolge aufeinander folgende Verfahrensschritte eines erfindungsgemäßen Verfahrens für die Herstellung eines erfindungsgemäßen Kunststoffformteils. In der Zeichnung a ist dargestellt, wie eine Dekorschicht 1 aus einem Polypropylengewebe mit einem Polypropylenfilm als Zwischenschicht 3 in einen Teil 6 einer Spritzgussform eingelegt wird, welche durch eine zweite Hälfte 7 der Spritzgussform verschlossen wird. Zu sehen ist auch eine mit einer Spirale 8 ausgestattete Kunststoffspritze 9. Die Zeichnung b zeigt die Spritzgussform mit dem die Dekorschicht aufnehmenden Teil 6 und der anderen Hälfte 7 im geschlossenen Zustand. Zu erkennen ist ein Hohlraum 10, der in der Spritzgussform hinter der Zwischenschicht 3 entstanden ist. Dieser Hohlraum 10 wird in dem abgebildeten Arbeitsschritt mit Daplen MSC 65 T20, einem Polypropylenmaterial, durch dessen Einspritzen mit einem Druck von 60 bar und einer Temperatur von 190°C gefüllt. Dieses Einspritzen und Hinterspritzen der Dekorschicht 1 geschieht durch ein Drehen der Spirale 8 der Kunststoffspritze 9. Zur Vermeidung von Schäden an der Dekorschicht 1 wird dabei die Temperatur des die Dekorschicht aufnehmenden Teils 6 der Spritzgussform unterhalb eines Werts von 40°C gehalten. Die Zeichnung c zeigt ein anschließendes Öffnen der Spritzgussform durch ein Abnehmen des die Dekorschicht 1 aufnehmenden Teils 6 der Spritzgussform von deren anderer Hälfte 7. Nach dem Öffnen wird das dreischichtige, aus Dekorschicht 1, Zwischenschicht 3 und Kunststoffträger 2 bestehende fertige Kunststoffformteil der Spritzgussform entnommen.

Besonders vorteilhaft sind Ausführungen von Kunststoffformteilen der hier beschriebenen Art, bei denen für den die Zwischenschicht bildenden Film ein (polyolefinisches) Material mit einem verglichen zur Dekorschicht niedrigeren - vorzugsweise um zwischen 10°C und 30°C niedrigeren - Schmelzpunkt verwendet wird. Dadurch lassen sich Beschädigungen der Dekorschicht bei der Herstellung des Kunststoffformteils vermeiden, weil der Film dann vor dieser anschmilzt und eine Verbindung der Dekorschicht mit dem Kunststoffträger so bewirkt werden kann, ohne dass die Dekorschicht in zu hohem Maß anschmilzt. Erreicht werden kann eine entsprechende Schmelzpunktdifferenz beispielsweise durch einen verglichen zur Dekorschicht höheren PE-Anteil der Zwischenschicht oder/und durch einen verglichen zur Zwischenschicht höheren PP-Anteil der Dekorschicht. Solche Materialunterschiede müssen die Recycelbarkeit nicht beeinträchtigen.

Vorzugsweise sind in jedem Fall ferner solche Ausführungen der Erfindung, bei denen die Dekorschicht die Zwischenschicht und der Kunststoffträger jeweils mit Blick auf die erwünschte Recycelbarkeit mit Gewichtsanteilen von mindestens 80% besser noch mindestens 90% Polylefine enthalten.

## Patentansprüche

1. Dreischichtiges Kunststoffformteil für Innverkleidungen, insbesondere für Kraftfahrzeuginnen-Verkleidungen, bestehend aus einer Dekorschicht (1), einem der Dekorschicht (1) hinterspritztem Kunststoffträger (2) und einem Film als Zwischenschicht zwischen Dekorschicht (1) und Kunststoffträger, wobei die Dekorschicht (1) ein Gewebe, ein Gestrick oder ein Gewirke ist, die Dekorschicht (1) und der Kunststoffträger (2) durch den Film kleberfrei verbunden sind und die Dekorschicht (1), der Film und der Kunststoffträger (3) aus Polyolefinen bestehen, **dadurch gekennzeichnet, dass** es eine unsichtbare Airbagabdeckung aufweist, wobei die Dekorschicht (1) oder die Dekorschicht (1) und der Film ein Scharnier für eine Airbagklappe bildet an Stellen (5), an denen der Kunststoffträger (2) als Schwächung (4) eine reduzierte oder verschwindende Dicke hat.

2. Kunststoffformteil nach Anspruch 1, **dadurch gekennzeichnet, dass** die Dekorschicht (1), der Film und der Kunststoffträger (2) aus Polypropylen und/oder Polyethylen, vorzugsweise nur aus Polypropylen bestehen.

3. Kunststoffformteil nach einem der Ansprüche 1 bis 2, **dadurch gekennzeichnet, dass** der Film eine Dicke zwischen 25 µm und 150 µm, vorzugsweise eine Dicke zwischen 50 µm und 70 µm hat.

4. Kunststoffformteil nach einem der Ansprüche 1 bis 3, **dadurch gekennzeichnet, dass** die Dekorschicht (1) eine Dicke zwischen 0,4 mm und 1,2 mm hat.

5. Kunststoffformteil nach einem der Ansprüche 1 bis 4, **dadurch gekennzeichnet, dass** der Kunststoffträger (2) eine Dicke zwischen 1,5 mm und 5 mm, vorzugsweise eine Dicke zwischen 2 mm und 3 mm hat.

6. Verfahren zur Herstellung eines dreischichtige Kunststoffformteils nach einem der vorhergehenden Ansprüche, bei dem einer Dekorschicht ein Kunststoffträger hinterspritzt wird, wobei ein Film als Zwischenschicht zwischen Dekorschicht und Kunststoffträger angeordnet wird, wobei für die Dekorschicht (1) ein Gewebe, ein Gestrick oder ein Gewirke Verwendung findet, und die Dekorschicht (1) beim Hinterspritzen durch ein Aufschmelzen des zusammen mit der Dekorschicht (1) in eine Spritzgussform eingebrachten Films kleberfrei mit dem Kunststoffträger (2) verbunden wird, **dadurch gekennzeichnet, dass** die Hinterspritzmasse für den Kunststoffträger (2) der Dekorschicht (1) mit einem Druck von zwischen 55 bar und 70 bar hinterspritzt wird, der Film sowohl eine Adhäsionsfunktion zur Verbindung der Dekorschicht mit dem Kunststoffträger hat als auch als Barriere gegen durchdringende Hinterspritzmasse und als Schutz der Dekorschicht (1) vor thermischen Schäden dient, und dass für die Dekorschicht (1) und den Film sowie als Hinterspritzmasse für den Kunststoffträger (2) ausschließlich Polyolefine zum Einsatz kommen.

7. Verfahren nach Anspruch 6, **dadurch gekennzeichnet, dass** als Material für die Dekorschicht (1), den Film und die Hinterspritzmasse Polypropylen und/oder Polyethylen, vorzugsweise nur Polypropylen verwendet wird.

8. Verfahren nach einem der Ansprüche 6 oder 7, **dadurch gekennzeichnet, dass** der Film eine Dicke zwischen 25 µm und 150 µm, vorzugsweise eine Dicke zwischen 50 µm und 70 µm hat.

9. Verfahren nach einem der Ansprüche 6 bis 8, **dadurch gekennzeichnet, dass** die Hinterspritzmasse für den Kunststoffträger (2) mit einer Dicke von zwischen 1,5 mm und 5 mm, vorzugsweise zwischen 2 mm und 3 mm aufgebracht wird.

10. Verfahren nach einem der Ansprüche 6 bis 9, **dadurch gekennzeichnet, dass** die Kunststoffformteile Türinnenverkleidungen, Säulenverkleidungen, Instrumentenbretter oder Bestandteile von Türinnenverkleidungen, Säulenverkleidungen oder Instrumentenbrettern sind.

11. Verfahren nach einem der Ansprüche 6 bis 10, **dadurch gekennzeichnet, dass** in die Kunststoffformteile eine unsichtbare Airbagabdeckung integriert wird, wobei der Kunststoffträger stellenweise mit Schwächungen (4) durch eine reduzierte oder verschwindende Dicke versehen wird, so dass die Dekorschicht (1) oder die Dekorschicht (1) und der Film an den entsprechenden Stellen (5) ein Scharnier für eine Airbagklappe und/oder eine Sollbruchstelle für einen Airbagdurchtritt bildet.

12. Verfahren nach einem der Ansprüche 6 bis 11, **dadurch gekennzeichnet, dass** die Hinterspritzmasse für den Kunststoffträger (2) der Dekorschicht (1) mit einer Temperatur von zwischen 180°C und 280°C hinterspritzt wird.

13. Verfahren nach einem der Ansprüche 6 bis 12, **dadurch gekennzeichnet, dass** die Temperatur eines die Dekorschicht (1) aufnehmenden Teils (6) der Spritzgussform beim Hinterspritzen einen Wert von 40°C nicht übersteigt.

## Claims

1. Three-layered plastic shape for interior lining, in particular for motor vehicle interior linings, composed of a decor layer (1), a plastic support (2) sprayed behind the decor layer (1) and a film as intermediate layer between decor layer (1) and plastic support, and the decor layer (1) is a fabric, knitted or machined material; the decor layer (1) and the plastic support (2) are free of glue joined by the film, and the decor layer (1), the film and the plastic support (3) are made of polyolefins, **characterised in that** it comprises an invisible airbag cover, and the decor layer (1) or the decor layer (1) and the film form a hinge for an airbag flap at points (5) where the plastic support (1) as weakening (4) has a reduced or vanishing thickness.

2. Plastic shape according to Claim 1, **characterised in that** the decor layer (1), the film and the plastic support (2) are composed of polypropylene and/or polyethylene, preferably only polypropylene.

3. Plastic shape according to one of Claims 1 to 2, **characterised in that** the film has a thickness between 25 µm and 150 µm, preferably between 50 µm and 70 µm.

4. Plastic shape according to one of Claims 1 to 3, **characterised in that** the decor layer (1) has a thickness between 0.4 mm and 1.2 mm.

5. Plastic shape according to one of Claims 1 to 4, **characterised in that** the plastic support (2) has a thickness between 1.5 mm and 5 mm, preferably a thickness between 2 mm and 3 mm.

6. Method for production of a three-layered plastic shape according to one of the above claims where a plastic support is sprayed behind a decor layer, a film is arranged as intermediate layer between decor layer and plastic support, and a fabric, knitted or machined material is used for the decor layer (1), and the decor layer (1) is whilst being rear-sprayed without glue connected to the plastic support (2) by melting the film which has been entered with the decor layer (1) into an injection-moulding shape,
**characterised in that** the material which is sprayed behind for the plastic support (2) of the decor layer (1) is sprayed behind at a pressure between 55 bar and 70 bar, the film serving both an adhesion function for joining the decor layer to the plastic support and also as barrier against penetrating rear-injecting substance and as protection for the decor layer (1) from thermal damages, and exclusively polyolefins are used for the decor layer (1) and the film as well as rear-injection substance for the plastic support (2).

7. Method according to Claim 6, **characterised in that** polypropylene and/or polyethylene, preferably only polypropylene, is used as material for the decor layer (1).

8. Method according to one of Claims 6 or 7, **characterised in that** the film has a thickness between 25 µm and 150 µm, preferably a thickness between 50 µm and 70 µm.

9. Method according to one of Claims 6 to 8, **characterised in that** the rear-injection substance for the plastic support (2) is applied with a thickness between 1.5 mm and 5 mm, preferably between 2 mm and 3 mm.

10. Method according to one of Claims 6 to 9, **characterised in that** the plastic shapes are door linings, column linings, instrument boards or parts of interior door linings, column linings or instrument boards.

11. Method according to one of Claims 6 to 10, **characterised in that** integrated into the plastic shape parts is an invisible airbag cover, and the plastic support is in some places provided with weakenings (4) by way of a reduced or vanishing thickness, so that the decor layer (1) or the decor layer (1) and the film establishes at respective points (5) a hinge for an airbag flap and/or a nominal breaking point for an airbag passage.

12. Method according to one of Claims 6 to 11, **characterised in that** the rear-injection substance for the plastic support (2) of the decor layer (1) is rear-injected at a temperature between 180° and 280°.

13. Method according to one of Claims 6 to 12, **characterised in that** the temperature of a part (6) of the injection mould which accommodates the decor layer (1) during rear-injection does not exceed a value of 40°.

## Revendications

1. Pièce moulée en matière plastique à trois couches pour des garnitures intérieures, en particulier pour des garnitures intérieures de véhicule automobile, se composant d'une couche de décoration (1), d'un support en matière plastique (2), moulé par injection à l'arrière de la couche de décoration (1), et d'un film en tant que couche intermédiaire entre la couche de décoration (1) et le support en matière plastique (2), la couche de décoration (1) étant un tissu, un tricot ou un textile à mailles, la couche de décoration (1) et le support en matière plastique (2) étant assemblés sans colle par l'intermédiaire du film, et la couche de décoration (1), le film et le support en matière plastique (3) se composant de polyoléfines, **caractérisée en ce que** ladite pièce moulée comporte un cache d'airbag non visible, la couche de décoration (1) ou la couche de décoration (1) et le film formant une charnière pour un volet d'airbag à des emplacements (5) où le support en matière plastique (2) a une épaisseur réduite ou extrêmement faible formant un affaiblissement (4).

2. Pièce moulée en matière plastique selon la revendication 1, **caractérisée en ce que** la couche de décoration (1), le film et le support en matière plastique (2) se composent de polypropylène et/ou de polyéthylène, de préférence uniquement de polypropylène.

3. Pièce moulée en matière plastique selon l'une quelconque des revendications 1 à 2, **caractérisée en ce que** le film a une épaisseur entre 25 µm et 150 µm, de préférence, une épaisseur entre 50 µm et 70 µm.

4. Pièce moulée en matière plastique selon l'une quelconque des revendications 1 à 3, **caractérisée en ce que** la couche de décoration (1) a une épaisseur entre 0,4 mm et 1,2 mm.

5. Pièce moulée en matière plastique selon l'une quelconque des revendications 1 à 4, **caractérisée en ce que** le support en matière plastique (2) a une épaisseur entre 1,5 mm et 5 mm, de préférence une épaisseur entre 2 mm et 3 mm.

6. Procédé de fabrication d'une pièce moulée en matière plastique à trois couches selon l'une quelconque des revendications précédentes, dans lequel un support en matière plastique est moulé par injection à l'arrière d'une couche de décoration, un film étant disposé en tant que couche intermédiaire entre la couche de décoration et le support en matière plastique, un tissu, un tricot ou un textile à mailles étant utilisés pour la couche de décoration (1) et, au cours du moulage par injection, la couche de décoration (1) étant assemblée sans colle contre le support en matière plastique (2) sous l'effet de la fusion d'un film introduit conjointement avec la couche de décoration dans un moule d'injection, **caractérisé en ce que** la pâte à injecter pour le support en matière plastique (2) est injectée à l'arrière de la couche de décoration (1) sous une pression entre 55 bars et 70 bars, le film a une fonction d'adhérence pour l'assemblage de la couche de décoration contre le support en matière plastique, de même qu'une fonction de barrière empêchant la pâte injectée de traverser et il est destiné à protéger la couche de décoration (1) contre les endommagements thermiques, et **en ce que** l'on utilise exclusivement des polyoléfines pour la couche de décoration (1) et pour le film, ainsi que sous forme de pâte à injecter pour constituer le support en matière plastique (2).

7. Procédé selon la revendication 6, **caractérisé en ce que** l'on utilise du polypropylène et/ou polyéthylène, de préférence uniquement du polypropylène comme matière pour la couche de décoration (1), le film et la pâte à injecter.

8. Procédé selon l'une quelconque des revendications 6 ou 7, **caractérisé en ce que** le film a une épaisseur entre 25 µm et 150 µm, de préférence une épaisseur entre 50 µm et 70 µm.

9. Procédé selon l'une quelconque des revendications 6 à 8, **caractérisé en ce que** la pâte à injecter pour le support en matière plastique (2) est appliquée avec une épaisseur entre 1,5 mm et 5 mm, de préférence une épaisseur entre 2 mm et 3 mm.

10. Procédé selon l'une quelconque des revendications 6 à 9, **caractérisé en ce que** les pièces moulées en matière plastique sont des garnitures intérieures de porte, des garnitures de montants de porte, des planches de bord ou des pièces constitutives des garnitures intérieures de porte, des garnitures de montants de porte ou des planches de bord.

11. Procédé selon l'une quelconque des revendications 6 à 10, **caractérisé en ce que** dans les pièces moulées en matière plastique est intégré un cache d'airbag non visible, le support en matière plastique comportant par endroits des affaiblissements (4) sous la forme d'une épaisseur réduite ou extrêmement faible, de telle sorte que la couche de décoration (1) ou la couche de décoration (1) et le film forme(nt) aux emplacements (5) correspondants une charnière pour un volet d'airbag et/ou une zone destinée à rupture pour le passage d'un airbag.

12. Procédé selon l'une quelconque des revendications 6 à 11, **caractérisé en ce que** la pâte à injecter pour le support en matière plastique (2) à l'arrière de la couche de décoration (1) est injectée à une température entre 180°C et 280°C.

13. Procédé selon l'une quelconque des revendications 6 à 12, **caractérisé en ce qu'**au cours du moulage par injection, la température d'une pièce (6) du moule d'injection, laquelle reçoit la couche de décoration (1), ne dépasse pas une valeur de 40°C.
